# EUROPÄISCHE PATENTSCHRIFT

(11) **EP 2 444 236 B1**
(45) Veröffentlichungstag und Bekanntmachung des Hinweises auf die Patenterteilung: **13.06.2018**
(21) Anmeldenummer: 10172121.5
(22) Anmeldetag: 06.08.2010
(51) Int. Cl.: B29C 51/02, B29C 51/14, B32B 37/15, B32B 38/14, B32B 38/12, B32B 27/08, B29K 23/00, B29K 27/06, B29L 9/00

(54) **Verfahren zum Herstellen von thermoplastisch geformten Anordnungen und Folienanordnung**
Process of manufacturing of thermoplastically formed arrangements and corresponding foils arrangement
Processus de fabrication d'arrangements thermoformés et arrangements de feuilles correspondants

(43) Veröffentlichungstag der Anmeldung: 25.04.2012
(73) Patentinhaber: Coveris Rigid (Zell) Deutschland GmbH, 56856 Zell (Mosel) (DE)
(72) Erfinder: Altenburg, Gerd, 37073 Göttingen (DE); Karjalainen, Jarmo, 13500 Hämeenlinna (FI)
(74) Vertreter: Hutzelmann, Gerhard

(56) Entgegenhaltungen:
- EP-A2- 2 143 548
- DE-A1-102009 026 312

## Beschreibung

Die Erfindung bezieht sich auf ein Verfahren zum Herstellen von thermoplastisch geformten Anordnungen aus Kunststofffolien, wobei eine aus wenigstens zwei Schichten bestehende Folienanordnung vorgesehen ist.

Beim Herstellen von thermoplastisch geformten Anordnungen werden oftmals mehrlagige und/oder bedruckte Kunststofffolien eingesetzt, die anschließend tiefgezogen werden.

Problematisch ist es dabei jedoch, daß beim Tiefziehen Abfall entsteht. Die eingesetzte Folie muss immer größer gewählt werden, um ein gutes und beständiges Tiefziehergebnis sicherzustellen. Der verbleibende Rand wird durch Stanzen oder Schneiden entfernt. Da diese Ränder mehrere Materialien enthalten und/oder auch Druckfarben enthalten sind, ist eine Wiederverwertung nur sehr eingeschränkt möglich.

Zudem besteht das erhebliche Problem, daß alle bekannten und vor allem im Lebensmittelbereich einsetzbaren Druckfarben dazu neigen, insbesondere beim Thermoformen abgerieben zu werden, so daß diese sich auf der Innenseite der späteren Verpackung absetzen können und so in das Lebensmittel gelangen können. Dies ist besonders bei Metallisierungen und Farben bzw. Beschichtungen mit einem Metallanteil nicht erlaubt, zumal diese noch leichter abgerieben werden.

Zudem können abgetrennte Reste des Tiefziehmaterials sehr leicht wieder voneinander getrennt und getrennt einer Wiederverwertung zugeführt werden.

Aus der EP 2 143 548A2 ist eine Lösung hierfür bekannt.

Desweiteren wurden in der Vergangenheit oftmals problematische Kaschierkleber eingesetzt um die Folienanordnungen zusammenzufügen. Diese sind jedoch besonders im Hinblick auf Kosten und Arbeitsaufwand und auch im Hinblick auf Lebensmittelechtheit und Trennbarkeit problematisch.

Es wurden in der Vergangenheit auch Versuche unternommen, einzelne Folienschichten durch Siegelschichten, also Schichten, die aus einem Siegelmaterial bestehen zu ersetzen und so auf Kaschierklebstoffe und Haftvermittler zu verzichten. Dies bedingt jedoch eine erhebliche Einschränkung bei der Materialauswahl, die nicht erwünscht ist.

Zusätzlich besteht das Problem, daß fertig geformte thermoplastische Anordnungen nicht mehr trennbar und daher nur schwer wiederverwertbar sind.

Aufgabe der Erfindung ist es, ein Verfahren vorzuschlagen, das es ermöglicht, nach Bedarf Folienanordnungen zusammenzustellen und Bedruckungen auszuwählen. Dabei muß sichergestellt sein, daß die Druckfarben, Beschichtungen und/oder Metallisierungen nicht abgerieben und in das Lebensmittel gelangen können. Zudem sollen anfallende Reste und umgeformte thermoplastische Anordnungen wieder sortenrein verwertet werden können.

Diese Aufgabe wird erfindungsgemäß dadurch gelöst, daß wenigstens partiell zwischen den Schichten eine Siegelschicht, insbesondere ein Siegellack, vorgesehen ist, die eine nachträgliche Trennung der Schichten durch eine nochmalige Erwärmung ermöglicht und so eine getrennte Wiederverwertung der durch die thermoplastische Verformung gebildeten Verpackung ermöglicht.

Hierdurch wird es ermöglicht, eine zwischen den Folienschichten angebrachte Bedruckung vor Abrieb zu schützen. Zusätzlich kann jedoch noch eine Oberflächenbedruckung vorgesehen sein.
Damit kann auf einfache Art und Weise ein guter Zusammenhalt zwischen den Schichten erzielt werden. Eine nachträgliche Trennung der Schichten durch eine nochmalige Erwärmung wird damit ermöglicht.

Eine weitere sehr vorteilhafte Ausgestaltung liegt auch dann vor, wenn die Bedruckung vor dem Zusammenfügen der Folienanordung und/oder vor dem thermoplastischen Verformen und/oder eine außenliegende Bedruckung auch nach dem Verformen angebracht wird.

So lassen sich sehr kurzfristig und direkt vor dem Formen dem thermoplastischen Verformen Bedruckungen anbringen, die dennoch geschützt sind. Das Anbringen von Metallisierungen oder dergleichen wird ebenfalls ermöglicht.

Ebenfalls sehr vorteilhaft ist es gemäß einer weiteren Ausgestaltung der Erfindung auch, wenn für jede Oberflächenseite eine Bedruckung vorgesehen wird, die beide innenliegend ausgeführt werden können.

Damit wird eine beidseitige Gestaltung ermöglicht, die zudem sehr abriebfest und widerstandsfähig ausgebildet ist. Die Bedruckung kann dabei spiegelverkehrt auf die Deckfolienschicht aufgebracht werden.

Desweiteren hat es sich als sehr vorteilhaft erwiesen, wenn die Bedruckung nicht vollflächig ausgeführt wird.

An den sich dabei ergebenden Fehlstellen in der Bedruckung können sich die Folienschicht direkt miteinander beim Umformvorgang miteinander verbinden.

Eine weitere sehr vorteilhafte Ausgestaltung liegt auch vor, wenn der Siegellack in einem Druckverfahren aufgebracht wird.

Damit kann der Siegellack einfach und schnell aufgetragen werden.

Sehr vorteilhaft ist es auch, wenn die Bedruckung im Flexo-, Sieb-, Tief- oder Hochdruckverfahren erfolgt.

Diese Druckverfahren haben sich als sehr effizient erwiesen.

Sehr vorteilhaft ist es auch, wenn die Folienschichten in adhäsiven Kontakt zueinander gebracht werden.

Durch das Zusammenführen werden die Folienschichten nicht fest miteinander verbunden, vielmehr weisen diese nur eine geringe Adhäsion aneinander auf. Vielmehr wird die zwischen den Folienschichten befindliche Luft bei Zusammenführung fertiger Folienlagen entfernt. Aber auch eine Extrusionsbeschichtung bzw. Extrusionskaschierung kann so ausgeführt werden. Eine Laminierung kann beispielsweise auf der Walzenvorheizung erfolgen. Es ist auch denkbar, daß die Folienschichten auch wieder mit geringem Kraftaufwand voneinander getrennt werden können. Erst durch die thermoplastische Umformung werden die Schichten miteinander so verbunden, daß diese gut aneinander haften und sich nicht von alleine voneinander lösen. Abgetrennte Reste des Tiefziehmaterials können so sehr leicht wieder voneinander getrennt werden und können getrennt einer Wiederverwertung zugeführt werden.

Es hat sich erfindungsgemäß als äußerst vorteilhaft erwiesen, wenn die Folienschichten beim thermoplastischen Verformen miteinander fest verbunden werden, wobei die thermoplastische Verformung als Tiefziehverfahren ausgeführt werden kann.

Durch die beim thermoplastischen Verformen und die dabei stattfindende Verpressung und wenigstens partiell auftretenden Streckungen werden die Folienschichten verbunden und eine ausreichende Haftung erzeugt. Gerade in vollflächig bedruckten Bereichen war bislang keine ausreichende Haftung sicherstellbar. Durch das erfindungsgemäße Verfahren wird aber auch in diesen Bereichen eine gute Haftung erzielt. Je nach Druckfarbe bzw. Lack werden variierende Haftungen erzielt. Die Variierung kann beispielsweise durch eine abgestufte Pigmentierung der Druckfarbe erfolgen. Beim Verformen der Folienanordnung können auch Mikrorisse in der Bedruckung bzw. im Lack auftreten, durch die die Folienschichten wieder in direkten Kontakt gelangen können, wodurch die Haftung nochmals verbessert werden kann. Diese Mikrorisse sind optisch nicht störend. Zusätzlich kann der Siegellack die Haftung verbessern.

Tiefziehverfahren sind weit verbreitet, so daß hier keine Neuentwicklung auf Maschinenseite notwendig ist.

Eine weitere sehr vorteilhafte Ausgestaltung der Erfindung liegt auch dann vor, wenn wenigstens ein Teil der Folienschichten aus einem Polyolefin, insbesondere einem Polyethylen, Polypropylen und/oder Polystyrol, PET, APET, PVC, PLA oder einem anderen auch biologisch abbaubaren und/oder auf nachwachsenden Rohstoffen basierenden Kunststoff und deren Mischungen bzw. Blends gefertigt wird.

Sehr vorteilhaft ist es dabei auch, wenn artfremde Folienschichten miteinander verbunden werden.

Mit all diesen Materialien wurden sehr gute Ergebnisse erzielt. Besonders PP in verschiedensten Abmischungen ist ein gebräuchlicher Rohstoff für Lebensmittelverpackungen.

Als äußerst vorteilhaft hat es sich erwiesen, wenn die thermoplastische Verformung bei PP bei 140 bis 165°C ausgeführt wird.

In diesem Temperaturbereich wird einerseits eine gute Verformbarkeit beobachtet und andererseits eine sehr gute Haftung der Folienschichten aneinander erreicht, die der von mit Haftvermittlern oder Kaschierklebern verbundener Folienschichten gleichwertig ist. Aufgrund des abweichenden Schmelzverhaltens sind die Temperaturen bei anderen Materialien entsprechend angepasst auszuwählen.

Sehr vorteilhaft ist es erfindungsgemäß auch, wenn die Verformung bei einem Pressdruck von 0 bis 15 bar, vorzugsweise zwischen 0 und 10 bar, besonders vorteilhaft von 3 bis 8 bar, vorzugsweise bei 5 bis 6 bar oder bei einem Unterdruck zwischen 0 und 1 bar ausgeführt wird.

Ebenfalls sehr vorteilhaft ist es auch, wenn die Verformungszeit 0,5 bis 5 Sekunden, vorzugsweise bei Polypropylen 1,5 bis 5 Sekunden beträgt und eine Kühlzeit von 0,2 bis 1,5 Sekunden, vorzugsweise bei Polypropylen von 0,5 bis 1,5 Sekunden eingehalten wird, die in der Verformungszeit eingeschlossen ist.

Durch die Einhaltung der genannten Verfahrensparameter wird eine sehr gute Verbindung der Folienschichten erzielt, die zum Beispiel beim Formen von Bechern, Schalen oder Deckeln auch benötigt wird.

Bei einer für das erfindungsgemäße Verfahren eingesetzten Folienanordnung zum Herstellen von thermoplastisch geformten Anordnungen, wobei eine aus wenigstens zwei Schichten bestehende Folienanordnung vorgesehen ist, wobei die Folienanordnung durch Zusammenführen einer fertigen Folie mit einer weiteren Folie, durch Extrusionsbeschichtung, Extrusionskaschierung, Coextrusion oder dergleichen gebildet ist und daß zwischen den beiden Schichten und/oder auf einer der beiden Schichten wenigstens partiell eine Bedruckung vorgesehen ist, und daß die Folienschichten bei einer anschließenden thermoplastischen Verformung miteinander verbunden werden können, wobei abgetrennte Reste des Tiefziehmaterials sehr leicht wieder voneinander getrennt und getrennt einer Wiederverwertung zugeführt werden können, ist es äußerst vorteilhaft, wenn zwischen den Folienschichten eine Siegelschicht, insbesondere ein Siegellack vorgesehen ist, die eine nachträgliche Trennung der Schichten durch eine nochmalige Erwärmung ermöglicht und so eine getrennte Wiederverwertung der durch die thermoplastische Verformung gebildeten Verpackung ermöglicht.

Hierdurch wird die Bedruckung, Bemalung, der Lackauftrag und/oder eine Metallisierung geschützt und verhindert, daß Bestandteile hiervon sich an anderer Stelle ablagern können und/oder direkt in das verpackte Lebensmittel gelangen können.
Durch die Siegelschicht bzw. den Siegellack wird der Zusammenhalt nochmals verbessert. Durch ein nochmaliges Erwärmen wird auch die Trennung der Folienschichten wieder ermöglicht.

Sehr vorteilhaft ist es dabei, wenn zwischen 0 und 100% PP Homopolymer, vorzugsweise zwischen 45 und 55% oder zwischen 75 und 85% PP Homopolymer, vorzugsweise 50% oder 80% PP Homopolymer vorgesehen sind.

Mit solchen Anteilen an PP Homopolymer wurden sehr gute Ergebnisse erzielt.

Dabei ist es sehr vorteilhaft, wenn dem PP Homopolymer ein weiterer Anteil aus PP Copolymer zugefügt ist, das bis zum fehlenden Anteil auf 100% zugesetzt sein kann.

Ebenfalls ist es gemäß einer weiteren Ausgestaltung der Erfindung sehr vorteilhaft, wenn wenigstens einem Teil der Folienschichten Antistatika, Füllmittel, Nukleierungsmittel, Antiblockzusätze, Gleitstoffe, Verarbeitungshilfsstoffe, Farbpigmente auch in Form von Masterbatches zugefügt sind.

Hierdurch lassen sich leicht verarbeitbare Gegenstände schaffen, die auch besondere optische Eigenschaften aufweisen können. So ist es beispielsweise denkbar, daß unter einer transparenten oder aber auch teilweise opaken, milchigen bzw. transparent farbigen Oberflächenfolie eine Bedruckung angeordnet ist, die auf einer opaken Unterfolienschicht angeordnet ist. Denkbar ist es dabei auch, daß auf der anderen Seite der Unterfolienschicht eine weitere Bedruckung angeordnet sein kann, die ihrerseits wiederum durch eine Deckfolie abgedeckt sein kann. Die Oberfolie, Deckfolie oder auch Unterfolie kann als Barriereschicht ausgebildet sein.

Es ist desweiteren gemäß einer Fortbildung der Erfindung auch sehr vorteilhaft, wenn wenigstens ein Teil der Folienschichten selbst aus einem Coextrudat besteht.

Dabei ist es auch sehr vorteilhaft, wenn zwischen den Folienschichten eine niedrig schmelzende Schicht, ein Heißsiegellack oder dergleichen vorgesehen ist.

Damit lassen sich auch vorgefertigte Folien sicher miteinander zum Beispiel über Temperierwalzen leicht aneinander haftend miteinander verbinden. Die endgültige Verbindung erfolgt wieder beim Verformen.

Eine weitere sehr vorteilhafte Ausgestaltung liegt auch dann vor, wenn wenigstens eine Außenansicht der Anordnung wenigstens teilweise transparent ausgebildet ist.

Damit wird eine sehr gute Lesbarkeit sichergestellt.

Eine weitere sehr vorteilhafte Ausgestaltung der Erfindung liegt auch vor, wenn wenigstens eine Außenschicht eine Mikroprägung, eine Mikroschäumung, eine glänzende oder matte Ausrüstung, eine perlmuttartige Ausrüstung, eine Metallisierung oder dergleichen aufweist.

Damit lassen sich sehr ansprechende optische Effekte erzeugen.

Sehr vorteilhaft ist es auch, wenn die Folienanordnung eine funktionelle Schicht, insbesondere eine Barriereschicht aufweist, die mit einer der strukturellen Schichten zusammenfallen kann.

Dadurch lassen sich auch Verpackungen erzeugen, die empfindliche Güter enthalten können. Es ist auch denkbar, daß die funktionelle Schicht Funktionen für die fertige Verpackung zur Verfügung stellt. Dabei sind beispielsweise Geruchsfunktionen, Verfärbungen entsprechend von Lagerbedingungen oder dergleichen denkbar.

Eine weitere, sehr vorteilhafte Fortbildung der Erfindung liegt auch vor, wenn zwischen einer Oberflächenschicht und einer weiteren Schicht ein Fremdkörper, wie beispielsweise eine Gel- oder Flüssigkeitsblase, ein Leaflet, ein Siegel, insbesondere ein Echtheitssiegel oder dergleichen eingebettet ist.

Damit lassen sich Gegenstände, die einen Mehrwert für die Verpackung darstellen auf einfache Art und Weise verpacken und an der Verpackung befestigen.

Im folgenden wird die Erfindung anhand eines Ausführungsbeispiels veranschaulicht.

Dabei zeigen:
- Fig. 1: die Bildung einer Folienanordnung zum Tiefziehen,
- Fig. 2: das Tiefziehen der Folienanordnung zu einem Deckel und das Abtrennen von überschüssigem Material, und
- Fig. 3: das Trennen des abgetrennten Materials zur Wiederverwertung.

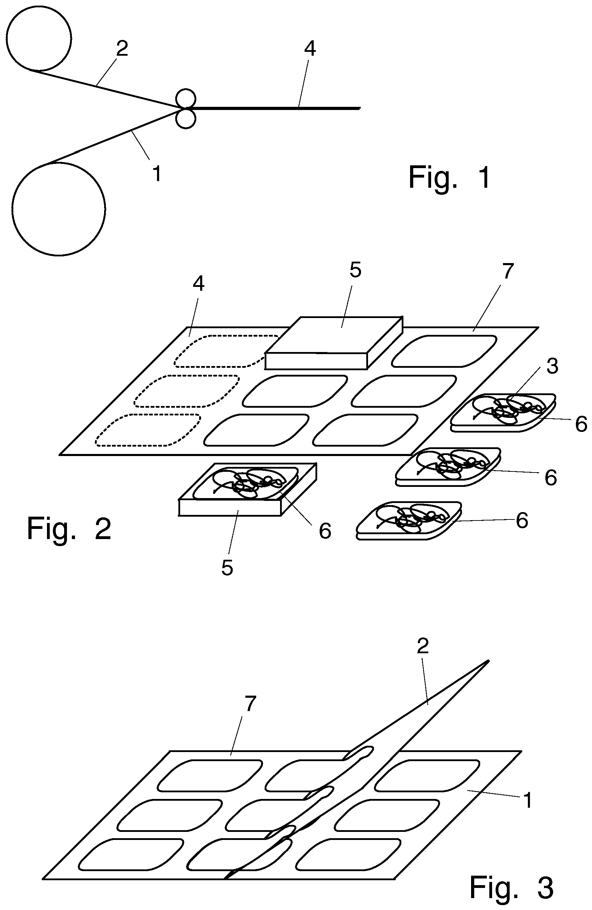

Mit 1 ist in Fig. 1 eine Basisfolie aus einem Polypropylen bezeichnet. Diese Basisfolie 1 wird mit einer Deckfolie 2 zusammengebracht, die fertig zuläuft und die auf der der Basisfolie 1 zugewandten Seite mit einer Bedruckung 3 versehen ist. Die beiden Folien 1 und 2 werden über eine Anpresswalze zusammengefügt, so daß diese aneinander anhaften, indem zwischen den Folien 1 und 2 enthaltene Luft wenigstens weitgehend entfernt wird. Die Anhaftung der beiden Folien 1 und 2 aneinander ist jedoch gering. Es wird eine Folienanordnung 4 gebildet, die anschließend einer Tiefziehvorrichtung 5 zugeführt werden, die aus der Folienanordnung 4 Schalen 6 oder andere räumlich geformte Gegenstände erzeugt.

Es ist aber auch denkbar, daß eine Basisfolie 1 oder eine Deckfolie 2 aus einem Polyolefin bedruckt wird und anschließend die bedruckte Seite im Extrusionsbeschichtungs- oder -kaschierungsverfahren mit einer weiteren Folienschicht abgedeckt wird. Wird die Deckfolie 2 bedruckt, so erfolgt die Bedruckung zumeist spiegelverkehrt. Im Bodenbereich können beispielsweise lesbare Texte vorgesehen werden, wohingegen im Wandbereich einer fertigen Schale zumeist Streudruck vorgesehen wird, der auch eine Verzerrung beim Tiefziehen berücksichtigen kann.

Damit wird eine abgedeckte Bedruckung oder Metallisierung erzeugt, die durch eine Folienschicht insbesondere gegen Abrieb geschützt ist.

Dabei kann die zunächst vorgesehene Folie 1 bzw. 2 entweder dick oder dünn ausgestaltet sein und der Materialauftrag entsprechend ausgerichtet sein.

Die fertige Folie oder aber auch die aufextrudierte Beschichtung kann auch als Barriereschicht vorgesehen sein und aus entsprechendem Barrierematerial gegen Sauerstoff, Wasserdampf oder anderen Stoffen bestehen.

Die Folienanordnung 4 ist breiter als der zu erzeugende Deckel 6, so daß beim Tiefziehen ein Rand 7 bestehen bleibt, der durch ein in der Tiefziehvorrichtung 5 angebrachtes, nicht näher dargestelltes Stanzwerkzeug vom Deckel 6 getrennt wird; bei mehreren gleichzeitig tiefgezogenen Deckeln 6 entstehen auch mehrere Ränder 7, die ebenfalls von dem Stanzwerkzeug abgetrennt werden.

Es ist denkbar, daß der getrennte Rand 7 vom Deckel 6 weggeführt wird und automatisch oder manuell wieder in die Folien 1 und 2 getrennt wird. Hierzu ist es denkbar, daß nach anfänglicher manueller Trennung getrennte Haspeln für die beiden Folien 1 und 2 vorgesehen sind. Anschließend können die Reste der Folie 1 wieder der ursprünglichen Folienextrusion zugefügt werden.

Beim Tiefziehen des Deckels 6 werden die Folienschichten 1 und 2 durch den Verformungsprozess, insbesondere durch den dabei auftretenden Druck und durch Streckungen fest miteinander verbunden. Die Umformdrücke liegen meist im Bereich zwischen 3 und 8 bar. Durch diesen hohen Druck werden auch kleinste Unebenheiten der Folienschichten 1 und 2 und der Bedruckung 3 genutzt um diese regelrecht miteinander zu verhaken. Zudem treten durch die beim Tiefziehen auftretenden Streckungen optisch nicht störende Mikrorisse in der Bedruckung 3 auf, durch die hindurch ein Zusammenhalt zwischen den Folienschichten 1 und 2 erzeugt wird. Wichtig ist dabei auch, daß eine Temperatur zwischen 140 und 165°C insbesondere bei Folienschichten aus Polypropylen eingehalten wird, da bei diesen Temperaturen eine der Verbindung förderliche Erweichung der Folienschichten erzielt wird.

Es ist aber auch denkbar, daß die Verformung im Vakuumverfahren oder bei anderen Drücken erfolgt. Diese können auch von den miteinander zu verbindenden Materialien und den eingesetzten Druckfarben bzw. Lacken abhängig sein.

Zusätzlich kann zwischen den Folienschichten 1 und 2 eine Siegelschicht vorgesehen sein, die aus einem Siegellack bestehen kann und partiell aufgetragen sein kann.

Gerade in Bereichen mit einer vollflächigen Bedruckung kann so der Zusammenhalt erheblich erhöht werden. Die Siegelschicht kann ebenfalls aufgedruckt sein.

Es ist aber auch denkbar, daß die Siegelschicht bei einem nochmaligen Erwärmen wieder erweicht und eine Trennung der Folienschichten 1 und 2 voneinander ermöglicht oder zumindest erleichtert.

Die meisten Folien weisen auf ihren beiden Oberseiten einen unterschiedlichen Glanzgrad auf. Durch das Zusammenfügen zweier Folien, bei denen jeweils die einen höheren Glanzgrad aufweisende Seite nach außen gerichtet ist, weist insgesamt einen sehr hohen Glanz und auch eine sehr hohe Transparenz auf. Die beiden nach innen gerichteten matteren Seiten verlieren durch das Verpressen beim Verformen ihre Mattigkeit.

Es sind auch andere Gestaltungen mit eingefärbten oder mit definierter Opazität versehenen Deckschichten denkbar. Perlmutteffekte, Mikroprägungen, Schäumungen oder dergleichen lassen sich so einfach realisieren.

Es ist auch denkbar, daß sowohl auf der Innenseite als auch auf der Außenseite des Deckels 6 eine Bedruckung, Metallisierung oder dergleichen vorgesehen ist, die partiell oder vollflächig ausgeführt sein können. Eine oder beide können durch eine Deckschicht abgedeckt sein.

Zwischen den Folienschichten 1 und 2 ist weder ein Haftvermittler noch ein Kaschierkleber vorgesehen. Vielmehr werden die Folienschichten nur physikalisch miteinander verbunden. Dieses Verbinden geschieht durch das Tiefziehen. Auch um die Erweichung im langsamer aufwärmenden Kern der Folienanordnung zu verbessern, kann eine niedrig schmelzende Schicht oder ein Siegellack vorgesehen werden, welche die Verbindung der Folienschichten zu verbessern vermögen.

Eine vorgesehene Bedruckung oder Metallisierung oder dergleichen ist wirksam geschützt und vermag das zu verpackende Lebensmittel nicht zu kontaminieren.

Die mechanische Verbindung mag zwar nicht so stabil sein, wie eine mit einem Kaschierkleber geschaffene Verbindung, jedoch ist diese völlig ausreichend und es wird dadurch auch die Möglichkeit eröffnet, die für die Schale verwendeten Materialien nach Gebrauch wieder voneinander zu trennen.

Beim Tiefziehen muss für eine gute Verbindung der Schichten 1 und 2 eine Verformungszeit zwischen 0,5 und 5 Sekunden, bei PP vorzugsweise zwischen 1,5 und 5 Sekunden und eine Kühlzeit zwischen 0,2 und 1,5 Sekunden, bei PP zwischen 0,5 und 1,5 Sekunden eingehalten werden. Für andere Materialien können diese Zeiten ebenso variieren wie die anzuwendenden Verformungstemperaturen und die Verformungsdrücke.

Durch den Verzicht auf Kaschierkleber und Haftvermittler werden nicht nur Materialkosten gespart. Vielmehr wird auch die Handhabung erheblich erleichtert.

Zum Beispiel können die beiden Folienschichten 1 und 2 völlig getrennt voneinander gefertigt werden. Ebenso ist eine Inline-Extrusionsbeschichtung bzw. -kaschierung beim Bedrucken einer Folie denkbar. Die Deckschicht 2 ist im üblichen erheblich dünner als die Basisschicht 1. Durch das späte Zusammenbringen der beiden Schichten kann flexibel auf Dekor und Beschriftungsänderungen reagiert werden. Die einzelnen Folienschichten weisen meistens eine Dicke zwischen 20 und 90 µm auf, bei PP zwischen 50 und 70 µm, können aber bei anderen Materialien variieren. Es ist beispielsweise denkbar, daß die Schichtdicken bei steiferen Materialien reduziert werden.

Meistens werden die dünneren Deckschichten 2 bedruckt. Gerade bei amorphen Kunststoffen wie zum Beispiel APET kann aber auch die dickere Basisschicht bedruckt werden und diese dann extrusionsbeschichtet werden. Hierdurch wird ein durch die auftretenden Temperaturen bedingter Schrumpf wirksam vermieden.

Außerdem ist es auch möglich, eigentlich unverträgliche Folienschichten 1 und 2 miteinander auf diese Art und Weise zu verbinden. Durch die physikalische Verbindung der Folienschichten haften auch diese eigentlich unverträglichen Materialien aneinander, ohne daß es dem Einsatz aufwendiger Verfahren und teurer Haftvermittler bedarf. Es sind Aufbauten denkbar, die eine Folienlage aus PE mit einer Folienlage aus PP kombinieren.

Der Verzicht auf Kaschierkleber und Haftvermittler ist auch gerade im Bereich von Lebensmittelverpackungen sehr vorteilhaft. Einerseits fällt dadurch die Notwendigkeit des Nachweises der nötigen Unbedenklichkeit weg. Andererseits wird aber auch die Wahrscheinlichkeit, daß diese Substanzen in die Lebensmittel gelangen können beseitigt.

Zudem wird eine Inline-Extrusionsbeschichtung bzw. -kaschierung erheblich erleichter bzw. erst ermöglicht.

Für die Folienschichten haben sich Polypropylen, insbesondere als Homopolymer und Copolymer in unterschiedlichen Mischungsverhältnissen als sehr vorteilhaft erwiesen. Polypropylen Homopolymer kann beispielsweise zwischen 0 und 100% vorgesehen sein, wobei sich zwischen 45 und 55%, insbesondere 50% und zwischen 75 und 85%, insbesondere 80% als besonders gut geeignet erwiesen haben. Der Rest ist dabei vorteilhafter weise durch Polypropylen Copolymer ergänzt.

Der Einsatz von Hilfsstoffen ist denkbar.

Es ist aber auch denkbar, daß Polyethylen, PLA oder auch andere thermoplastisch verformbare, insbesondere tiefziehbare Kunststoffe wie zum Beispiel PS, APET eingesetzt werden können.

Die Folien 1 und 2 sollten nicht gereckt sein um einen Schrumpf beim Zusammenfügen des Folienaufbaus zu vermeiden.

Es ist auch denkbar, daß zwischen den Folienschichten 1 und 2 Fremdkörper, wie zum Beispiel Flüssigkeits- oder Gelblasen, Leaflets, Siegel, insbesondere Echtheitssiegel eingebettet werden. Derartige Fremdkörper werden einfach, aber dennoch sicher an der hergestellten Verpackung befestigt.

Es ist desweiteren auch denkbar, daß beidseitig einer inneren Folienschicht jeweils eine Deckschicht vorgesehen wird. Dabei kann auch beidseitig eine abgedeckte Bedruckung vorgesehen werden.

## Patentansprüche

1. Verfahren zum Herstellen von thermoplastisch geformten Anordnungen aus Kunststofffolien, wobei eine aus wenigstens zwei Schichten (1,2) bestehende Folienanordnung (4) vorgesehen ist, wobei die Folienanordnung (4) durch Zusammenführen einer fertigen Folie (1) mit einer weiteren Folie (2), durch Extrusionsbeschichtung, Extrusionskaschierung, Coextrusion oder dergleichen gebildet wird und daß zwischen den beiden Schichten und/oder auf einer der beiden Schichten wenigstens partiell eine Bedruckung (3) vorgesehen ist, und daß die Folienschichten (1,2) bei einer anschließenden thermoplastischen Verformung miteinander verbunden werden, wobei abgetrennte Reste des Tiefziehmaterials sehr leicht wieder voneinander getrennt und getrennt einer Wiederverwertung zugeführt werden können, **dadurch gekennzeichnet, daß** wenigstens partiell zwischen den Schichten eine Siegelschicht, insbesondere ein Siegellack, vorgesehen ist, die eine nachträgliche Trennung der Schichten durch eine nochmalige Erwärmung ermöglicht und so eine getrennte Wiederverwertung der durch die thermoplastische Verformung gebildeten Verpackung ermöglicht.

2. Verfahren nach Anspruch 1, **dadurch gekennzeichnet, daß** die Bedruckung (3) vor dem Zusammenfügen der Folienanordung (4) und/oder vor dem thermoplastischen Verformen und/oder eine außenliegende Bedruckung (3) auch nach dem Verformen angebracht wird und/oder daß für jede Oberflächenseite eine Bedruckung (3) vorgesehen wird, die beide innenliegend ausgeführt werden können.

3. Verfahren nach Anspruch 1 oder 2, **dadurch gekennzeichnet, daß** die Bedruckung (3) nicht vollflächig ausgeführt wird.

4. Verfahren nach einem der Ansprüche 1, 2 oder 3, **dadurch gekennzeichnet, daß** der Siegellack in einem Druckverfahren aufgebracht wird

5. Verfahren nach einem der vorangehenden Ansprüche, **dadurch gekennzeichnet, daß** die Bedruckung (3) im Flexo-, Sieb-, Tief- oder Hochdruckverfahren erfolgt.

6. Verfahren nach einem der vorangehenden Ansprüche, **dadurch gekennzeichnet, daß** die Folienschichten (1, 2) in adhäsiven Kontakt zueinander gebracht werden und/oder daß die Folienschichten (1,2) beim thermoplastischen Verformen miteinander fest verbunden werden, wobei die thermoplastische Verformung als Tiefziehverfahren ausgeführt werden kann.

7. Verfahren nach einem der vorangehenden Ansprüche, **dadurch gekennzeichnet, daß** wenigstens ein Teil der Folienschichten (1, 2) aus einem Polyolefin, insbesondere einem Polyethylen, Polypropylen und/oder Polystyrol, PET, APET, PVC, PLA oder einem anderen auch biologisch abbaubaren und/oder auf nachwachsenden Rohstoffen basierenden Kunststoff und deren Mischungen bzw. Blends gefertigt wird, wobei in allen Fällen artfremde Folienschichten miteinander verbunden werden können.

8. Verfahren nach einem der vorangehenden Ansprüche, **dadurch gekennzeichnet, daß** die thermoplastische Verformung bei PP bei 140 bis 165°C und/oder daß die Verformung bei einem Pressdruck von 0 bis 15 bar, vorzugsweise zwischen 0 und 10 bar, besonders vorteilhaft von 3 bis 8 bar, vorzugsweise bei 5 bis 6 bar oder bei einem Unterdruck zwischen 0 und 1 bar ausgeführt wird, wobei in allen Fällen die Verformungszeit 0,5 bis 5 Sekunden, vorzugsweise bei Polypropylen 1,5 bis 5 Sekunden betragen kann und eine Kühlzeit von 0,2 bis 1,5 Sekunden, vorzugsweise bei Polypropylen von 0,5 bis 1,5 Sekunden eingehalten wird, die in der Verformungszeit eingeschlossen ist.

9. Folienanordnung (3) zum Herstellen von thermoplastisch geformten Anordnungen (6), wobei eine aus wenigstens zwei Schichten (1,2) bestehende Folienanordnung (3) vorgesehen ist, wobei die Folienanordnung (4) durch Zusammenführen einer fertigen Folie (1) mit einer weiteren Folie (2), durch Extrusionsbeschichtung, Extrusionskaschierung, Coextrusion oder dergleichen gebildet ist und daß zwischen den beiden Schichten und/oder auf einer der beiden Schichten wenigstens partiell eine Bedruckung (3) vorgesehen ist, und daß die Folienschichten (1,2) bei einer anschließenden thermoplastischen Verformung miteinander verbunden werden können, wobei abgetrennte Reste des Tiefziehmaterials sehr leicht wieder voneinander getrennt und getrennt einer Wiederverwertung zugeführt werden können, **dadurch gekennzeichnet, daß** zwischen den Folienschichten (1, 2) eine Siegelschicht, insbesondere ein Siegellack vorgesehen ist, die eine nachträgliche Trennung der Schichten durch eine nochmalige Erwärmung ermöglicht und so eine getrennte Wiederverwertung der durch die thermoplastische Verformung gebildeten Verpackung ermöglicht.

10. Folienanordnung nach Anspruch 9, **dadurch gekennzeichnet, daß** eine Polypropylenschicht zwischen 0 und 100% PP Homopolymer, vorzugsweise zwischen 45 und 55% oder zwischen 75 und 85% PP Homopolymer, vorzugsweise 50% oder 80% PP Homopolymer vorgesehen sind, wobei dem PP Homopolymer ein weiterer Anteil aus PP Copolymer zugefügt sein kann, das bis zum fehlenden Anteil auf 100% zugesetzt sein kann.

11. Folienanordnung nach Anspruch 9 oder 10, **dadurch gekennzeichnet, daß** wenigstens einem Teil der Folienschichten (1,2) Antistatika, Füllmittel, Nukleierungsmittel, Antiblockzusätze, Gleitstoffe, Verarbeitungshilfsstoffe, Farbpigmente auch in Form von Masterbatches zugefügt sind.

12. Folienanordnung nach einem der Ansprüche 9 bis 11, **dadurch gekennzeichnet, daß** wenigstens ein Teil der Folienschichten (1, 2) selbst aus einem Coextrudat besteht.

13. Folienanordnung nach einem der Ansprüche 9 bis 12, **dadurch gekennzeichnet, daß** zwischen den Folienschichten (1, 2) eine niedrig schmelzende Schicht, ein Heißsiegellack oder dergleichen vorgesehen ist.

14. Folienanordnung nach einem der Ansprüche 9 bis 13, **dadurch gekennzeichnet, daß** wenigstens eine Außensicht der Anordnung wenigstens teilweise transparent ausgebildet ist und/oder daß wenigstens eine Außenschicht eine Mikroprägung, eine Mikroschäumung, eine glänzende oder matte Ausrüstung, eine perlmuttartige Ausrüstung, eine Metallisierung oder dergleichen aufweist.

15. Folienanordnung nach einem der Ansprüche 9 bis 14, **dadurch gekennzeichnet, daß** die Folienanordnung (4) eine funktionelle Schicht, insbesondere eine Barriereschicht aufweist, die mit einer der strukturellen Schichten zusammenfallen kann und/oder daß zwischen einer Oberflächenschicht und einer weiteren Schicht ein Fremdkörper, wie beispielsweise eine Gel- oder Flüssigkeitsblase, ein Leaflet, ein Siegel, insbesondere ein Echteitssiegel oder dergleichen eingebettet ist.

## Claims

1. Method of producing thermoplastically shaped arrangements of plastics material foils, wherein a foil arrangement (4) consisting of at least two layers (1, 2) is provided, wherein the foil arrangement (4) is formed by bringing together a finished foil (1) and a further foil (2) by extrusion coating, extrusion lamination, coextrusion or the like and that a printing (3) is provided at least partly between the two layers and/or on one of the two layers and that the foil layers (1, 2) are connected together in a subsequent thermoplastic deformation, wherein separated-off residues of the deep-drawn material can be readily separated from one another again and supplied separately for recycling, **characterised in that** a sealing layer, particularly a sealing lacquer, is provided at least partly between the layers and enables subsequent separation of the layers by repeated heating and thus separate recycling of the packaging formed by the thermoplastic deformation.

2. Method according to claim 1, **characterised in that** the printing (3) is applied prior to joining together the foil arrangement (4) and/or prior to the thermoplastic deformation and/or an outwardly disposed printing (3) is applied even after the deformation, and/or a printing (3) is provided for each surface side and these two printings can be inwardly disposed.

3. Method according to claim 1 or 2, **characterised in that** the printing (3) is not applied over the whole area.

4. Method according to any one of claims 1, 2 and 3, **characterised in that** the sealing lacquer is applied in a printing process.

5. Method according to any one of the preceding claims, **characterised in that** the printing (3) is carried out in a flexographic printing process, screen printing process, gravure printing process or relief printing process.

6. Method according to any one of the preceding claims, **characterised in that** the foil layers (1, 2) are brought into adhesive contact with one another and/or that the foil layers (1, 2) are fixedly connected together during thermoplastic deformation, wherein the thermoplastic deformation can be carried out as a deep-drawing process.

7. Method according to any one of the preceding claims, **characterised in that** at least a part of the foil layers (1, 2) is made from a polyolefin, particularly a polyethylene, polypropylene and/or polystyrol, PET, APET, PVC, PLA or another, also biologically degradable synthetic material and/or synthetic material based on regeneratable raw materials and mixtures or blends thereof, wherein in all cases foil layers foreign to one another can be connected together.

8. Method according to any one of the preceding claims, **characterised in that** the thermoplastic deformation in the case PP is carried out at 140 to 165° C and/or that the deformation is carried out at a pressing pressure of 0 to 15 bars, preferably between 0 and 10 bars, particularly advantageously from 3 to 8 bars, preferably at 5 to 6 bars or at a subatmospheric pressure between 0 and 1 bars, wherein in all cases the deformation time can be 0.5 to 5 seconds, preferably in the case polypropylene 1.5 to 5 seconds, and a cooling time of 0.2 to 1.5 seconds, preferably in the case of polypropylene from 0.5 to 1.5 seconds, is maintained, and is included in the deformation time.

9. Foil arrangement (3) for producing thermoplastically shaped arrangements (6), wherein a foil arrangement (4) consisting of at least two layers (1, 2) is provided, wherein the foil arrangement (4) is formed by bringing together a finished foil (1) and a further foil (2) by extrusion coating, extrusion lamination, coextrusion or the like and that a printing (3) is provided at least partly between the two layers and/or on one of the two layers and that the foil layers (1, 2) can be connected together in a subsequent thermoplastic deformation, wherein separated-off residues of the deep-drawn material can be readily separated from one another again and supplied separately for recycling, **characterised in that** a sealing layer, particularly a sealing lacquer, is provided between the foil layers (1, 2) and enables subsequent separation of the layers by repeated heating and thus separate recycling of the packaging formed by the thermoplastic deformation.

10. Foil arrangement according to claim 9, **characterised in that** a polypropylene layer between 0 and 100% PP homopolymer, preferably between 45 and 55% or between 75 and 85% PP homopolymer, preferably 50% or 80% PP homopolymer, is provided, wherein a further proportion of PP copolymer can be added to the PP hompolymer, which can be added up to the lacking proportion to 100%.

11. Foil arrangement according to claim 9 or 10, **characterised in that** antistatic agents, fillers, nucleation agents, anti-blocking additives, lubricants, processing additives and colouring pigments, also in the form of master batches, are added to at least a part of the foil layers (1, 2)

12. Foil arrangement according to any one of claims 9 to 11, **characterised in that** at least a part of the foil layers (1, 2) themselves consists of a coextrudate.

13. Foil arrangement according to any one of claims 9 to 12, **characterised in that** a low-melting-point layer, a heat-sealing lacquer or the like is provided between the foil layers (1, 2).

14. Foil arrangement according to any one of claims 9 to 13, **characterised in that** at least an outer aspect of the arrangement is formed to be transparent at least in part and/or that at least an outer aspect has a microstamping, a microfoaming, a shiny or matt finish, a nacreous finish, a metallisation or the like.

15. Foil arrangement according to any one of claims 9 to 14, **characterised in that** the foil arrangement (4) has a functional layer, particularly a barrier layer, which can coincide with one of the structural layers and/or that a foreign body such as, for example, a gel or liquid bubble, a leaflet, a seal, in particular an authenticity seal, or the like is embedded between a surface layer and a further layer.

## Revendications

1. Procédé de fabrication d'agencements thermoformés en des films de matière plastique, sachant qu'il est prévu un ensemble (4) de films qui est constitué d'au moins deux couches (1, 2), ledit ensemble (4) de films étant formé par revêtement par extrusion, stratification par extrusion, coextrusion ou opérations similaires, en regroupant un film achevé (1) et un film supplémentaire (2), une mention imprimée ou impression (3) étant prévue, au moins en partie, entre les deux couches et/ou sur l'une des deux couches, et les couches de films (1, 2) étant reliées l'une à l'autre lors d'un formage thermoplastique consécutif, sachant que des résidus, séparés d'avec le matériau embouti en profondeur, peuvent être très aisément dissociés de nouveau les uns des autres, puis dirigés distinctement vers un recyclage, **caractérisé par le fait qu'**une couche de scellement et notamment une laque de scellement, au moins partiellement prévue entre les couches, permet une dissociation après coup desdites couches, par chauffage réitéré, et autorise ainsi une réutilisation distincte de l'emballage produit par le formage thermoplastique.

2. Procédé selon la revendication 1, **caractérisé par le fait que** la mention imprimée (3) est apposée préalablement à l'assemblage de l'ensemble (4) de films et/ou préalablement au formage thermoplastique, et/ou une mention imprimée extérieure (3) est également apposée à l'issue du formage ; et/ou **par le fait qu'**une mention imprimée (3) est prévue pour chaque côté de la surface, l'une et l'autre pouvant être ménagées intérieurement.

3. Procédé selon la revendication 1 ou 2, **caractérisé par le fait que** la mention imprimée (3) n'est pas ménagée sur toute la superficie.

4. Procédé selon la revendication 1, 2 ou 3, **caractérisé par le fait que** la laque de scellement est déposée par un procédé d'impression.

5. Procédé selon l'une des revendications précédentes, **caractérisé par le fait que** la mention imprimée (3) est produite par flexographie, par sérigraphie, par héliogravure ou par typographie.

6. Procédé selon l'une des revendications précédentes, **caractérisé par le fait que** les couches de films (1, 2) sont mises en contact mutuel adhérent ; et/ou **par le fait que** lesdites couches de films (1,2) sont reliées rigidement l'une à l'autre lors du formage thermoplastique, ledit formage thermoplastique pouvant être effectué en tant que procédé d'emboutissage profond.

7. Procédé selon l'une des revendications précédentes, **caractérisé par le fait qu'**au moins une partie des couches de films (1, 2) est produite en une polyoléfine, notamment en un polyéthylène, en un polypropylène et/ou en un polystyrène, en du PET, de l'APET, du PVC, du PLA ou une autre matière plastique également biodégradable et/ou à base de matières premières renouvelables, et en des mélanges ou combinaisons de ces derniers, sachant que des couches de films de natures différentes peuvent être reliées les unes aux autres dans tous les cas.

8. Procédé selon l'une des revendications précédentes, **caractérisé par le fait que**, dans le cas du PP, le formage thermoplastique est effectué à entre 140 et 165 °C ; et/ou **par le fait que** ledit formage est effectué sous une pression de contact de 0 à 15 bar(s), de préférence entre 0 et 10 bar(s), de 3 à 8 bars avec préférence particulière, préférentiellement de 5 à 6 bars, ou sous une dépression située entre 0 et 1 bar, sachant que, dans tous les cas, le temps de formage peut durer de 0,5 à 5 seconde(s), préférentiellement de 1,5 à 5 seconde(s) pour le polypropylène, avec maintien d'un temps de refroidissement de 0,2 à 1,5 seconde(s), préférentiellement de 0,5 à 1,5 seconde(s) pour le polypropylène, qui est inclus dans ledit temps de formage.

9. Ensemble (4) de films dévolu à la fabrication d'agencements thermoformés (6), sachant qu'il est prévu un ensemble (4) de films qui est constitué d'au moins deux couches (1, 2), ledit ensemble (4) de films étant formé par revêtement par extrusion, stratification par extrusion, coextrusion ou opérations similaires, en regroupant un film achevé (1) et un film supplémentaire (2), une mention imprimée (3) étant prévue, au moins en partie, entre les deux couches et/ou sur l'une des deux couches, et les couches de films (1, 2) étant reliées l'une à l'autre lors d'un formage thermoplastique consécutif, sachant que des résidus, séparés d'avec le matériau embouti en profondeur, peuvent être très aisément dissociés de nouveau les uns des autres, puis dirigés distinctement vers un recyclage, **caractérisé par le fait qu'**une couche de scellement et notamment une laque de scellement, prévue entre les couches de films (1, 2), permet une dissociation après coup desdites couches, par chauffage réitéré, et autorise ainsi une réutilisation distincte de l'emballage produit par le formage thermoplastique.

10. Ensemble de films selon la revendication 9, **caractérisé par le fait qu'**il est prévu une couche de polypropylène renfermant entre 0 et 100 % d'homopolymère PP, de préférence entre 45 et 55 % ou entre 75 et 85 % d'homopolymère PP, préférentiellement 50 % ou 80 % d'homopolymère PP, la possibilité étant offerte d'adjoindre, à l'homopolymère PP, une part additionnelle de copolymère PP pouvant être ajouté pour combler à 100 % la part manquante.

11. Ensemble de films selon la revendication 9 ou 10, **caractérisé par le fait que** des agents antistatiques, des substances de charge, des agents de nucléation, des additifs anti-adhérents, des agents de glissement, des auxiliaires de traitement, des pigments colorés, également sous forme de mélanges maîtres, sont adjoints à au moins une partie des couches de films (1,2).

12. Ensemble de films selon l'une des revendications 9 à 11, **caractérisé par le fait qu'**au moins une partie des couches de films (1,2) est constituée, par elle-même, d'un coextrudat.

13. Ensemble de films selon l'une des revendications 9 à 12, **caractérisé par le fait qu'**une couche à faible point de fusion, une laque de scellement à chaud, ou une substance analogue, est prévue entre les couches de films (1,2).

14. Ensemble de films selon l'une des revendications 9 à 13, **caractérisé par le fait qu'**au moins une couche extérieure dudit ensemble est de réalisation au moins partiellement transparente ; et/ou **par le fait qu'**au moins une couche extérieure est pourvue d'une micro-empreinte, d'une micro-expansion, d'un apprêt brillant ou mat, d'un apprêt nacré, d'une métallisation ou d'une particularité similaire.

15. Ensemble de films selon l'une des revendications 9 à 14, **caractérisé par le fait que** ledit ensemble (4) de films comporte une couche fonctionnelle, en particulier une couche formant barrière qui peut coïncider avec l'une des couches structurelles ; et/ou **par le fait qu'**un corps étranger comme, par exemple, une bulle de gel ou de liquide, une notice, un sceau et notamment un cachet d'authenticité, ou un objet analogue, est noyé entre une couche superficielle et une autre couche.
